# EUROPEAN PATENT APPLICATION

(11) **EP 1 998 568 A2**
(43) Date of publication of application: **03.12.2008**
(21) Application number: 08151736.9
(22) Date of filing: 21.02.2008
(51) Int. Cl.: H04N 7/24

(54) **Method for acquiring reduced image and video apparatus using the same**

(30) Priority: 30.05.2007 KR 20070052674
(71) Applicant: Samsung Electronics Co., Ltd., Suwon-si, Gyeonggi-do 442-742 (KR)
(72) Inventor: Song, Min-suk, Gyeonggi-do (KR)
(74) Representative: Clark, David James

(57) **Abstract**

A method and apparatus for acquiring a reduced image are provided. A reduced image is acquired by starting receiving video data corresponding to a video from an external apparatus (S510), determining whether reduced image data in the video data is completely received while the video data is being received (S520), and stopping the receiving the video data if it is determined that the reduced image data is completely received (S530).

## Description

### BACKGROUND OF THE INVENTION

### 1. Field of the Invention

Methods and apparatuses consistent with the present invention relate to acquiring an image, and more particularly but not exclusively, to a method for acquiring an image from the exterior device, and a video apparatus using the same.

### 2. Description of the Related Art

With advance of radio communication and networking technologies, devices constituting a network are able to wirelessly transmit and receive a video and thus utilize a file stored on one device.

Basic Image Profile (BIP) is one of the transfer protocols applied to the wireless network constructed according to Bluetooth. A first Bluetooth device can receive not only a video but also a thumbnail image from a second Bluetooth device while receiving the file from the second Bluetooth device using the BIP.

However, the BIP does not support a function which enables the first Bluetooth device to receive a list of videos stored to the second Bluetooth device.

As a result, a user of the first Bluetooth device cannot select his/her intended video or thumbnail image of the video stored at the second Bluetooth device. To enable the user to select the intended video of the thumbnail image from the second Bluetooth device, the user needs to physically access the second Bluetooth device and then select the intended video or the thumbnail image of the video by manipulating the second Bluetooth device in person.

To change the video or the thumbnail image of the video being reproduced through the first Bluetooth device, the user also needs to physically access the second Bluetooth device and then select another intended video or thumbnail image of the video by personally manipulating the second Bluetooth device. Therefore, the user's inconvenience is increased.

### SUMMARY OF THE INVENTION

Exemplary embodiments of the present invention aim to address the above problems and/or disadvantages and other disadvantages not described above.

According to an aspect of the present invention, there is provided a method for acquiring a reduced image comprising starting receiving video data corresponding to a video from an external apparatus, determining whether or not reduced image data in the video data are completely received while the video data are received, and upon determining that reception of the reduced image data is completed, stopping receiving the video data.

The determining may comprise determining whether or not reception of the reduced image data is completed according to whether or not a mark indicating an end of the reduced image data in the video data is received.

The mark indicating the end of the reduced image data may be an End Of Image (EOI) occurring prior to the last EOI among a plurality of EOIs in the video data.

The method may further comprise determining that the reduced image data are not included in the fore part of the video data, stopping receiving the video data.

The stopping may comprise determining that the reduced image data are not included in the fore part of the video data, if it is determined that a mark indicating a start of the reduced image data in the video data is not received until a specified proportion of the entire video data is received.

The mark indicating the start of the reduced image data may be a Start Of Image (SOI) occurring later than the first SOI among a plurality of SOIs in the video data.

The starting may start receiving the video data from the external apparatus according to a non-real-time protocol.

The non-real-time protocol may comprise, for example, but not limited to, File Transfer Protocol (FTP).

The starting may start receiving the video data from the external apparatus according to the non-real-time protocol using the Bluetooth communication standard.

The method may further comprise requesting the external apparatus for the video data according to the non-real-time protocol, and wherein the starting may be executed in response to the external apparatus corresponding to the request.

The method may further comprise starting receiving data corresponding to another video, if reception of the video data is stopped.

The starting may be executed, if a user requests the reduced image, or an item related to the video is selected by the user through a User Interface (UI).

According to another aspect of the present invention, there is provided a video apparatus comprising a communication module which is connected to an external apparatus to communicate with the external apparatus, and a control unit which controls the communication module to start receiving video data corresponding to a video from the external apparatus, and stops receiving the video data upon determining that reduced image data in the video data are completely received while the video data are received through the communication module.

The control unit may determine whether or not reception of the reduced image data is completed according to whether or not a mark indicating an end of the reduced image data in the video data is received.

The mark indicating the end of the reduced image data may be an EOI occurring prior to the last EOI among a plurality of EOIs in the video data.

The control unit may stop receiving the video data, if it is determined that the reduced image data are not included in the fore part of the video data.

The control unit may determine that the reduced image data are not included in the fore part of the video data, if it is determined that a mark indicating a start of the reduced image data in the video data is not received until a specified proportion of the entire video data is received.

The mark indicating the start of the reduced image data may be a SOI occurring later than the first SOI among a plurality of SOIs in the video data.

The control unit may start receiving the video data from the external apparatus through the communication module according to a non-real-time protocol.

The non-real-time protocol may comprise, for example, but not limited to, FTP.

The control unit may start receiving the video data from the external apparatus through the communication module according to the non-real-time protocol using the Bluetooth communication standard.

The control unit may request the external apparatus for the video data through the communication module according to the non-real-time protocol, and receive the video data in response to the external apparatus corresponding to the request through the communication module.

The control unit may start receiving data corresponding to another video through the communication module, if reception of the video data is stopped.

The control unit may start receiving the video data, if there is request for the reduced image by a user, or an item related to the video is selected by the user through a UI.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a digital television (DTV) according to an exemplary embodiment of the present invention;
FIG. 2 is a flowchart illustrating a process of acquiring a thumbnail image of a video being received at the DTV of FIG. 1 according to FTP;
FIGS. 3A and 3B are drawings to explain the process of acquiring the thumbnail image of FIG. 2;
FIG. 4 is a block diagram illustrating an image apparatus according to another exemplary embodiment of the present invention; and
FIG. 5 is a flowchart illustrating a method for acquiring a reduced image of a video received according to a non-real-time transfer protocol, according to another exemplary embodiment of the present invention.

### DETAILED DESCRIPTION OF EXEMPLARY EMBODIMENTS OF THE PRESENT INVENTION

Certain exemplary embodiments of the present invention will now be described in greater detail with reference to the accompanying drawings.

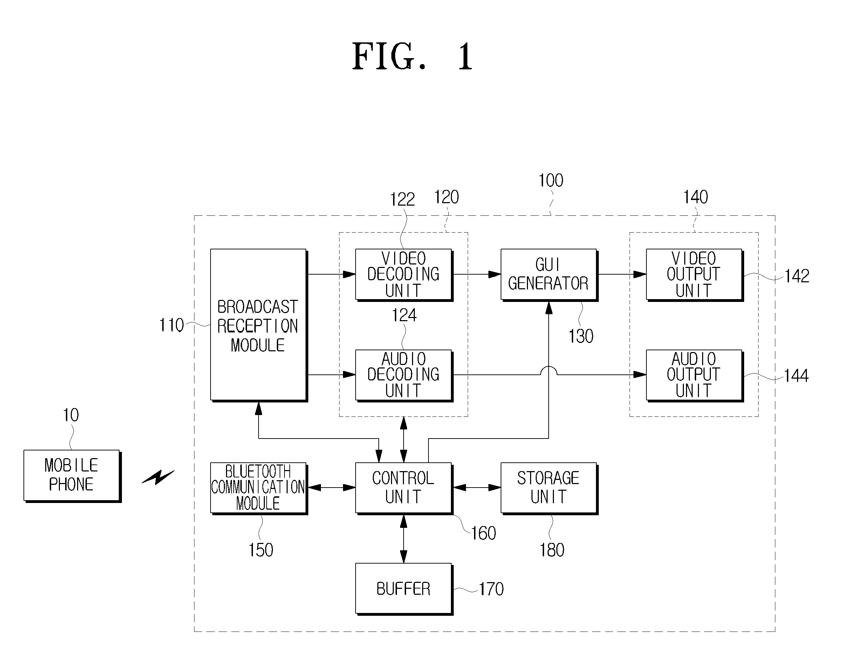

FIG. 1 is a block diagram of a DTV according to an exemplary embodiment of the present invention. A DTV 100 of FIG. 1 not only receives and provides broadcast to a user, but also receives data from a mobile phone 10 wirelessly connected thereto.

The DTV 100 receives a video from the mobile phone 10 according to a non-real-time transfer protocol, that is, a protocol which does not support multimedia streaming.

An FTP may be applied to a non-real-time transfer protocol. The DTV 100, which requests a video from the mobile phone 10 according to the FTP, operates as a file transfer (FT) client, and the mobile phone 10, which provides the DTV 100, operates as a FT server.

The DTV 100 may receive the video stored in the mobile phone 10, and display the received video on a screen. The DTV 10 may acquire a thumbnail image which is a reduced image of the video while receiving the video from the mobile phone 10.

Referring to FIG. 1, the DTV 100 according to an exemplary embodiment of the preset invention may comprise a broadcast reception module 110, a decoding unit 120, a graphical user interface (GUI) generator 130, an output unit 140, a Bluetooth communication module 150, a control unit 160, a buffer 170, and a storage unit 180.

The broadcast reception module 110 receives a broadcast signal from a broadcast station or a satellite over wire or wirelessly. The broadcast reception module 110 divides the received broadcast signal into video data, audio data, and other data, and outputs the divided data.

The decoding unit 120 decodes the divided audio and video data. The decoding unit 120 comprises a video decoding unit 122 and an audio decoding unit 124.

The video decoding unit 122 converts the input video data into a reproducible format by decoding the video data. The audio decoding unit 124 converts the input audio data into a reproducible format by decoding the audio data. The video decoding unit 122 and the audio decoding unit 124 can receive data from the broadcast reception module 110, or the control unit 160, which will be explained below.

The GUI generator 130 generates a GUI to be displayed on a screen, and adds the generated GUI to the video which is decoded and output from the video decoding unit 122.

The output unit 140 outputs video and audio. The output unit 340 comprises a video output unit 142 and an audio output unit 144.

The video output unit 142 displays the video comprising the GUI output from the GUI generator 130 on a display (not shown), or outputs the video to an external device (e.g., another DTV) connected through an external output port (not shown).

The audio output unit 144 outputs the audio from the audio decoding unit 124 through a speaker (not shown), or outputs the audio to an external device connected through an external output port (not shown).

The Bluetooth communication module 150 is wirelessly connected to the mobile phone 10, which is a Bluetooth device, to communicate with the mobile phone 10 according to the Bluetooth communication standard.

The control unit 160 controls the overall operation of the DTV 100. The control unit 160 controls the broadcast reception of the broadcast reception module 110, the communication of the Bluetooth communication module 150, the GUI generation of the GUI generator 130, and so forth.

The control unit 160 stores the data received from the mobile phone 10 through the Bluetooth communication module 150 in the buffer 170. The control unit 160 copies data to be stored for a long period of time among the data stored in the buffer 170 to the storage unit 180.

The storage unit 180 can be implemented using a recording medium, for example, but not limited to, a memory or Hard Disk Drive (HDD), and a controller for writing or reading data to and from the recording medium.

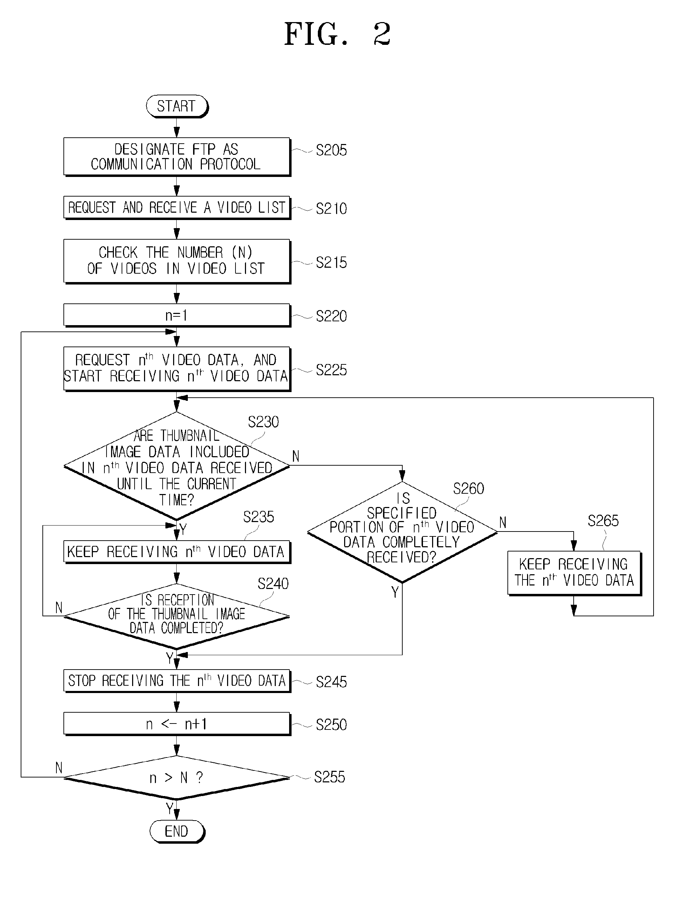

The control unit 160 can extract and acquire a thumbnail image from the video data being received while the video data are received from the mobile phone 10 through the Bluetooth communication module 150, which will be explained in detail with reference to FIG. 2.

FIG. 2 is a flowchart illustrating a process of acquiring a thumbnail image of a video being received at the DTV of FIG. 1 according to FTP.

Referring to FIG. 2, the control unit 160 designates the FTP as the communication protocol between the DTV 100 and the mobile phone 10 (S205).

The control unit 160 requests and receives a video list from the mobile phone 10 via the Bluetooth communication module 150 (S210). Herein, the 'video list' indicates a list of still image files stored in the mobile phone 10.

The communication protocol between the DTV 100 and the mobile phone 10 is set to the FTP at operation S205, and the FTP supports a function of receiving the file list of the connected device. Hence, the control unit 160 is able to request and receive the video list from the mobile phone 10 at operation S210.

The control unit 160 checks the number of videos (N) (S215), and sets a variable 'n' equal to '1' (S220).

The control unit 160 asks the mobile phone 10 for data regarding the *n^{th}* video (referred to as *n^{th}* video data) from among the videos in the video list through the Bluetooth communication module 150, and starts receiving *n^{th}* video data being transmitted in response to the request (S225). At this time, as n = 1, the received video data may be the first video data.

As the FTP is designated as the communication protocol between the DTV 100 and the mobile phone 10 at operation S205, the requesting and receiving the *n^{th}* video data are executed according to the FTP at operation S225.

While the *n^{th}* video data are received (that is, before completing receiving the *n^{th}* video data), the control unit 160 determines whether or not thumbnail image data are included in the video data which have been received until the current time (S230).

The received *n^{th}* video data are stored in the buffer 170, and the thumbnail image data thereof are recorded in the video, which will be explained in detail. The control unit 160 may execute operation S230 by searching the thumbnail image data from the *n^{th}* video data which have been stored in the buffer 170 until the current time (S230).

If a mark indicating a start of thumbnail image data is located in the video data, the control unit 160 determines that the thumbnail image data are included in the video data.

If it is determined that the thumbnail image data are included in the *n^{th}* video data received until the current time (5230-Y), the control unit 160 keeps receiving the *n^{th}* video data (S235).

The control unit 160 determines whether or not reception of the thumbnail image data is completed (S240). More particularly, if a mark indicating end of thumbnail image data is located in the video data, the control unit 160 determines that reception of the thumbnail image data is completed.

If it is determined that reception of the thumbnail image data is completed (S240-Y), the control unit 160 stops receiving the *n^{th}* video data (S245). That is, at operation S245, the control unit 160 requests the mobile phone 10 to stop transmission of *n^{th}* video data through the Bluetooth communication module 150.

The control unit 160 may keep only the thumbnail image data among the *n^{th}* video data which is received and stored in the buffer 170 until the current time, and deletes the other video data. The control unit 160 may transmit the thumbnail image data to the GUI generator 130 so that the thumbnail image is output from the video output unit 142.

If the thumbnail image data are in compressed form, the control unit 160 may decompress the compressed data directly, or may transmit the compressed data to the video decoding unit 122 to decompress the compressed data.

If it is determined that the thumbnail image data are not included in the *n^{th}* video data which are received until the current time (S230-N), the control unit 160 determines whether a specified portion, for example, 30%, of the *n^{th}* video data is received (S260).

If it is determined that the specified portion of the *n^{th}* video data is not received (S260-N), the control unit 160 keeps receiving the *n^{th}* video data (S265), and repeats operations from operation S230.

However, if it is determined that the specified portion of the *n^{th}* video data is received (S260-Y), the control unit 160 stops receiving the *n^{th}* video data (S245). To sum up, if the thumbnail image data are not received within a specified portion of the *n^{th}* video data, the control unit 160 stops receiving the *n^{th}* video data.

The control unit 160 may remove the *n^{th}* video data which are received and stored in the buffer 170, until the current time.

After the control unit 160 stops receiving the *n^{th}* video data, the control unit 160 increments the variable 'n' to 'n+1' (S250), reiterates operations from operation S225 as long as 'n' is not lager than N, i.e., the number of videos in the video list checked at operation S215 (S255). That is, operation S225 through operation S255 are executed with respect to all the videos in the video list received at operation S210.

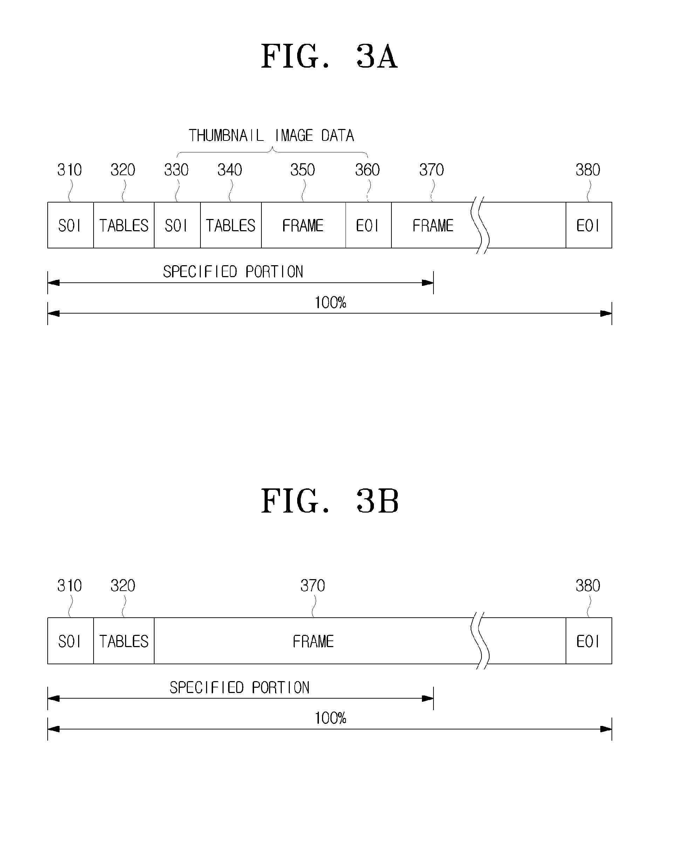

The process of acquiring the thumbnail image will be explained with reference to FIG. 3A and 3B.

FIG. 3A illustrates the structure of video data including thumbnail image data. The video data of FIG. 3A comprise a start-of-image (SOI) 310 which indicates start of image, a TABLES 320 used as a reference in decompressing the video, a FRAME 370 which is actual data corresponding to the video, and an-end-of image (EOI) 380 which is a mark indicating end of image.

Thumbnail image data are recorded in the video data of FIG. 3A. The thumbnail image data comprise SOI 330 which indicates start of the thumbnail image, a TABLES 340 used as a reference in decompressing the thumbnail image, a FRAME 350, which are actual data corresponding to the thumbnail image, and an EOI 360 which indicates end of the thumbnail image.

The SOI 310 of the video data is the first SOI, and the SOI 330 of the thumbnail image data is the second SOI (occurring later than the first SOI) among the SOIs 310, 330 recorded in the video data, when the thumbnail image data are recorded in the video data.

The EOI 380 of the video data is a last EOI, and the EOI 360 of the thumbnail image data occurs prior to the last EOI 380 among the EOIs 360, 380 recorded in the video data, when the thumbnail image data are recorded in the video data.

Referring to FIG. 3A, the thumbnail image data are positioned at the fore part of the video. That is, the SOI of the thumbnail image data is provided within a specified portion, for example, 30%, of the fore part of the video data.

If the video data as shown in FIG. 3A are received at the DTV 100, operation S235 is reiterated and the video data are received continuously until the EOI 360 indicating end of the thumbnail image is received. However, if the EOI 360 is received, the process of operation S245 is executed, and reception of the video data is stopped.

FIG. 3B illustrates the structure of video data not including thumbnail image data. The video data of FIG. 3B comprise SOI 310, TABLES 320, FRAME 370, and EOI 380 of the video. However thumbnail video data are not recorded in the video.

If the video data as shown in FIG. 3B are received at the DTV 100, the thumbnail image data are not received until 30% of the entire video data is received. Accordingly, operation S245 is executed, and reception of the video data is stopped after 30% of the video data are received.

A process of acquiring a thumbnail image from video data while the video data are received is described in detail with an exemplary embodiment of the present invention.

The FTP described in the exemplary embodiment of the present invention is a non-real-time transfer protocol. The present invention may be applied to non-real-time transfer protocols other than the FTP.

A mobile phone and DTV execute wireless communication according to the Bluetooth communication standard in an exemplary embodiment of the present invention, but the Bluetooth communication standard is only an example of wireless communication. The present invention may be applied when the mobile phone and DTV communicate over wire or wirelessly using a different communication standard than Bluetooth.

A mobile phone is only an example of external apparatus connectable to a DTV, and other external apparatuses may be used. The DTV is an example of a video apparatus, and the present invention is applicable to other video apparatuses other than the DTV.

A process of acquiring a thumbnail image corresponding to all the videos in a video list is performed sequentially in an exemplary embodiment of the present invention, but it is merely an exemplary embodiment for convenient description. It may be implemented in order that a process of acquiring a thumbnail image corresponding to some parts of the videos is performed. The parts of the videos may be selected by a user.

A process of acquiring a thumbnail image is executed after receiving a video list in an exemplary embodiment of the present invention, but it is merely an exemplary embodiment of the present invention. Accordingly, the process of acquiring a thumbnail image may start at other time points instead of the time point of completing reception of a video. For example, it may be implemented in order that the process is executed when 1) a user requests a thumbnail image, or 2) an item related to a video is selected, through a User Interface (UI).

In the above example, the former case 1) may be when a user selects a thumbnail image show item regarding a video, and the latter case 2) may be when a user selects an item indicating a title of a video.

SOI and EOI are used as a mark to indicate start and end of a thumbnail image in an exemplary embodiment of the present invention, but other marks may also be used.

If the thumbnail image data are not received until 30% of the entire video data is received, reception of the video data is stopped in an exemplary embodiment of the present invention. Herein, 30% is merely an example for convenient description of the present invention. Alternatively, other proportions may be applicable to the present invention.

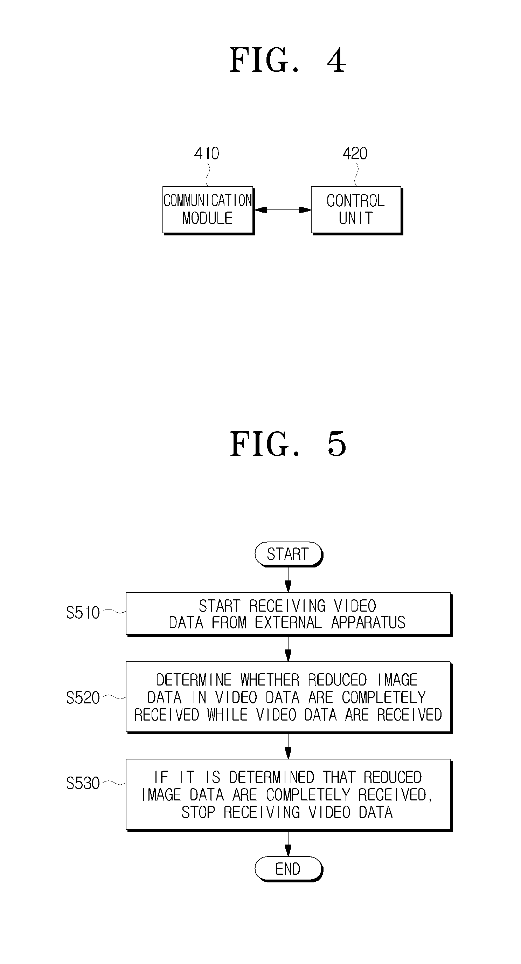

Hereinbelow, another exemplary embodiment of the present invention will be explained in detail with reference to FIGS. 4 and 5.

Referring to FIG. 4, a video apparatus according to another exemplary embodiment of the present invention may comprise a communication module 410, and a control unit 420.

The communication module 410 is connected to an external apparatus to communicate with the external apparatus. The control unit 420 controls the communication module 410 to start reception of video data corresponding to a video from the external apparatus. If it is determined that reduced image data in the video data are completely received while the video data are received through the communication module 410, the control unit 420 stops receiving the video data.

Referring to a method for acquiring a reduced image of FIG. 5, a video apparatus starts receiving video data corresponding to a video from an external apparatus (S510). The video apparatus determines whether or not reduced image data in the video data are completely received while the video data are received (S520). If it is determined that the reduced image data are received, the video apparatus stops receiving the video data (S530).

Accordingly, a reduced image may be acquired from video data being received while the video data are received.

According to exemplary embodiments of the present invention, a reduced image is acquired from video data being received while the video data are received such that a reduced image corresponding to video stored in other apparatuses may be acquired with ease.

If it is determined that a reduced image corresponding to a video is acquired, or there is no reduced image in the video, reception of the video is stopped, and another video may be received. Therefore, a reduced image corresponding to videos stored in an external apparatus may be acquired fast in such embodiments.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for acquiring a reduced image, the method comprising:
starting receiving video data corresponding to a video from an external apparatus (S510);
determining whether reduced image data in the video data is completely received while the video data is being received (S520); and
stopping the receiving the video data if it is determined that the reduced image data is completely received (S530).

2. The method of claim 1, wherein the determining comprises determining whether the reduced image data is completely received based on whether a mark indicating an end of the reduced image data in the video data is received.

3. The method of claim 2, wherein the mark indicating the end of the reduced image data is an End Of Image (EOI) occurring prior to a last EOI among a plurality of EOls in the video data.

4. The method of claim 1, 2 or 3, further comprising:
stopping the receiving the video data if it is determined that the reduced image data are not included in a predetermined portion of the video data.

5. The method of claim 4, wherein the stopping comprises determining that the reduced image data is not included in the predetermined portion of the video data, if it is determined that a mark indicating a start of the reduced image data in the video data is not received within a specified percentage of the entire video data is received.

6. The method of claim 4 or 5, wherein the mark indicating the start of the reduced image data is a Start Of Image (SOI) occurring later than a first SOI among a plurality of SOIs in the video data.

7. The method of any preceding claim, wherein the starting starts receiving the video data from the external apparatus according to a non-real-time protocol.

8. The method of claim 7, wherein the non-real-time protocol comprises File Transfer Protocol.

9. The method of claim 7 or 8, wherein the starting starts receiving the video data from the external apparatus according to the non-real-time protocol according to the Bluetooth communication standard.

10. The method of any preceding claim, further comprising:
requesting the external apparatus for the video data according to a non-real-time protocol (S205-S220),
and wherein the starting is executed in response to the external apparatus corresponding to the request (S225).

11. The method of any preceding claim, further comprising starting receiving data corresponding to another video, if reception of the video data is stopped.

12. The method of any preceding claim, wherein the starting is executed if a user requests the reduced image or an item related to the video is selected by the user through a user interface.

13. A video apparatus comprising:
a communication module (410) which is communicably linked to an external apparatus; and
a control unit (420) which controls the communication module to start receiving video data corresponding to a video from the external apparatus, and stops receiving the video data if it is determined that reduced image data in the video data is completely received while the video data is received through the communication module.

14. The apparatus of claim 13, wherein the control unit (420) determines whether the reduced image data is completely received based on whether a mark indicating an end of the reduced image data in the video data is received.

15. The apparatus of claim 14, wherein the mark indicating the end of the reduced image data is an End Of Image (EOI) occurring prior to a last EOI among a plurality of EOIs in the video data.

16. The apparatus of claim 13, wherein the control unit (420) stops receiving the video data, if it is determined that the reduced image data is not included in a predetermined portion of the video data.

17. The apparatus of claim 14, 15 or 16, wherein the control unit (420) determines that the reduced image data is not included in the predetermined portion of the video data, if it is determined a mark indicating a start of the reduced image data in the video data is received within a specified percentage of the entire video data.

18. The apparatus of claim 14, 15, 16 or 17, wherein the mark indicating the start of the reduced image data is a Start Of Image (SOI) occurring later than a first SOI among a plurality of SOIs in the video data.

19. The apparatus of any one of claims 13-18, wherein the control unit (420) starts receiving the video data from the external apparatus through the communication module (410) according to a non-real-time protocol.

20. The apparatus of claim 19, wherein the non-real-time protocol comprises File Transfer Protocol.

21. The apparatus of claim 19 or 20, wherein the control unit (420) starts receiving the video data from the external apparatus through the communication module (410) according to the non-real-time protocol according to the Bluetooth communication standard.

22. The apparatus of any one of claims 13-21, wherein the control unit (420) requests the external apparatus for the video data through the communication module (410) according to a non-real-time protocol, and receives the video data in response to the external apparatus corresponding to the request through the communication module (410).

23. The apparatus of any one of claims 13-22, wherein the control unit (420) starts receiving data corresponding to another video through the communication module (410), if reception of the video data is stopped.

24. The apparatus of any one of claims 13-23, wherein the control unit (420) starts receiving the video data if there is request for the reduced image by a user or an item related to the video is selected by the user through a user interface.
